Europäisches Patentamt

European Patent Office

Office européen des brevets

(19)

(11) Veröffentlichungsnummer: **0 226 005**
**A2**

(12) # EUROPÄISCHE PATENTANMELDUNG

(21) Anmeldenummer: 86114943.3

(22) Anmeldetag: 28.10.86

(51) Int. Cl.⁴: **B 23 Q 1/24**

(30) Priorität: 19.12.85 DE 3544962

(43) Veröffentlichungstag der Anmeldung:
24.06.87 Patentblatt 87/26

(84) Benannte Vertragsstaaten:
DE FR GB IT SE

(71) Anmelder: SMW Schneider & Weisshaupt GmbH
Wiesentalstrasse 28
D-7996 Meckenbeuren(DE)

(72) Erfinder: Hiestand, Karl, Ing.
Mühlweg 2
D-7798 Pfullendorf(DE)

(74) Vertreter: Engelhardt, Guido, Dipl.-Ing.
Montafonstrasse 35 Postfach 1350
D-7990 Friedrichshafen 1(DE)

(54) Lünette.

(57) Bei einer selbstzentrierenden Lünette (1) mit drei Haltegliedern (13, 14) ist zur zentrischen Einspannung eines Werkstückes (2) mit einem vorgegebenen Durchmesser und bei einer einstellbaren Spannkraft zum Ausgleich der unterschiedlichen Zustellwege zwischen den beiden äußeren Haltegliedern (13, 14) und dem mittleren Halteglied (12) sowie der elastischen Verformungen der an der Kraftübertragung beteiligten Bauteile das mit den äußeren Haltegliedern (13, 14) zusammenwirkende Verstellglied (15) gegenüber dem mittleren Halteglied (12) bei der Justierung unter Last in dessen Längsrichtung (A) um eine einstellbare dem Ausgleich entsprechende Wegstrecke (S) gegenüber dem mittleren Halteglied (12) definiert verstellbar angeordnet.

Dadurch ist es möglich, alle Fertigungstoleranzen und alle bei einer Einspannung unumgänglichen elastischen Verformungen auszugleichen, so daß eine hohe Maßgenauigkeit nicht mehr erforderlich ist und die Steuerflächen (16, 17) des Steuergliedes (15) als geradlinig verlaufende Kegelflächen ausgebildet werden können.

EP 0 226 005 A2

./...

DIPL.-ING. GUIDO ENGELHARDT   PATENTANWALT
7990 Friedrichshafen

**0226005**

SMW Schneider & Weißhaupt
GmbH

7996 Meckenbeuren

Lünette

Die Erfindung bezieht sich auf eine Lünette zum Aufspannen und/oder zur Halterung von stangenförmigen
Werkstücken kreisförmigen Durchmessers auf einer
Drehmaschine mit drei in einer gemeinsamen Ebene angeordneten Haltegliedern, deren jeweiliger Berührungsort
gleichen Abstand von der Werkstückachse hat und von
denen zwei Halteglieder als spiegelbildlich zueinander
angeordnete schwenkbar gelagerte Winkelhebel ausgebildet
sind und wobei zwischen diesen ein in Richtung auf die
Werkzeugachse geradlinig durch einen von Druckmittel
beaufschlagbaren Betätigungskolben verschiebbares
drittes Halteglied eingesetzt ist, das ein Verstellglied in Form eines mit Steuerflächen versehenes
Prisma trägt,das mit den freien Enden der Winkelhebel
zusammenwirkt.

Eine Aufspanneinrichtung dieser Art, die sich in der
Praxis außerordentlich gut bewährt hat, ist durch die
DE-OS 16 02 740 bekannt. Die Herstellung der konkav
gekrümmten Steuerflächen des fest mit dem mittleren
Halteglied verbundenen, meist an diesem unmittelbar
angearbeiteten Steuergliedes ist hierbei jedoch mit
einem erheblichen Aufwand verbunden, da durch diese

./.

die unterschiedlichen Zustellwege zwischen den jeweils um eine Achse auf das Werkstück zu geschwenkten äußeren Halteglieder und dem mittleren radial verstellbaren Halteglied auszugleichen sind und somit eine äußerst hohe Genauigkeit unumgänglich ist. Dennoch läßt sich, vor allem wenn hohe Spannkräfte erforderlich sind, bedingt durch die elastischen Verformungen der an der Kraftübertragung beteiligten Bauteile der Lünette ein Versatz eines Werkstückes mitunter nicht vermeiden. Die Zustellwege der beiden äußeren Halteglieder sind in derartigen Fällen, da diese aufgebogen werden, geringer als der Zustellweg des starren mittleren Haltegliedes, das Werkstück wird somit aus der Mitte gedrückt, so daß eine zentrische Einspannung nicht mehr gegeben und damit eine maßgenaue Bearbeitung eines Werkstückes nicht mehr möglich ist.

Aufgabe der Erfindung ist es daher, die Lünette der vorgenannten Art in der Weise auszugestalten, daß ein Werkstück mit einem vorgegebenen Durchmesser bei einer einstellbaren Spannkraft stets exakt zentrisch einzuspannen ist. Alle Fertigungstoleranzen und alle bei einer Einspannung unumgänglichen elastischen Verformungen sollen somit ausgeglichen werden, so daß eine hohe Maßgenauigkeit bei der Fertigung nicht mehr erforderlich ist  und die Steuerflächen demnach nicht mehr als konkav gekrümmte Flächen sondern als geradlinig verlaufende Kegelflächen ausgebildet werden können.

Gemäß der Erfindung wird dies dadurch erreicht, daß zur zentrischen Einspannung eines Werkstückes mit einem vorgegebenen Durchmesser und bei einer einstellbaren Spannkraft zum Ausgleich der unterschiedlichen Zustellwege zwischen den beiden äußeren Haltegliedern und dem mittleren Haltelgied sowie der elastischen

./.

0226005

Verformungen der an der Kraftübertragung beteiligten Bauteile der Lünette das Verstellglied gegenüber dem mittleren Halteglied bei der Justierung unter Last in dessen Längsrichtung um eine einstellbare dem Ausgleich entsprechenden Wegstrecke gegenüber dem mittleren Halteglied definiert verstellbar angeordnet ist.

Dies kann in einfacher Ausgestaltung derart bewerkstelligt werden, daß das mittlere Halteglied drehfest z. B. mittels des Verstellgliedes verschiebbar geführt und über ein Gewinde, eine Kugelrollspindel oder einem ähnlichen Übertragungsmittel mit einem Steuerglied verbunden ist, das durch den Betätigungskolben verschiebbar und mittels eines Stellgliedes verdrehbar ist.

Hierbei ist es zweckmäßig, das Steuerglied durch eine abgesetzte und/oder mit einem Flansch versehene Stange zu bilden, an der vorzugsweise mittig der Betätigungskolben abgestützt ist und an deren einem Ende das mittlere Halteglied mittels des Gewindes verstellbar und an deren anderem Ende das Stellglied angebracht ist.

Als Stellglied ist hierbei ein mit einem integrierten Schrittzählwerk ausgestatteter Schrittmotor vorzusehen, dessen Verdrehwege mittels eines Impulszählers feststellbar und in einem Rechenwerk speicherbar sind.

Wird eine Lünette gemäß der Erfindung ausgebildet, so ist stets eine zentrische Einspannung eines Werkstückes mit einem vorgegebenen Durchmesser bei einer einstellbaren Spannkraft gewährleistet. Durch die definierte Verschiebbarkeit des Verstellgliedes gegenüber dem mittleren Halteglied können nämlich

./.

nicht nur die unterschiedlichen Zustellwege der beiden äußeren Halteglieder gegenüber dem mittleren Halteglied zuverlässig ausgeglichen werden, sondern auch sämtliche Abweichungen, die durch Fertigungstoleranzen bedingt sind oder die durch die elastische Verformung der an der Kraftübertragung beteiligten Bauteile der Lünette auftreten. Die Steuerflächen des Steuergliedes sind demnach nicht mehr als konkav gekrümmte Flächen auszubilden, diese können vielmehr als geradlinige Kegelflächen gestaltet werden. Durch eine entsprechende Verstellung des Verstellgliedes gegenüber dem mittleren Halteglied ist auch der dadurch bedingte größere Zustellweg der äußeren Halteglieder zu eliminieren. Und da das Verstellglied als Schrittmotor ausgebildet ist, der an ein Rechenwerk angeschlossen ist, in dem für den jeweiligen Werkstückdurchmesser und die jeweilige Spannkraft die einmal bestimmte Wegstrecke, um die das Verstellglied gegenüber dem mittleren Halteglied zu verstellen ist, gespeichert ist und abgerufen werden kann, ist bei Eingabe dieser Daten eine selbsttätige Einstellung in sehr kurzer Zeit zu bewerkstelligen.

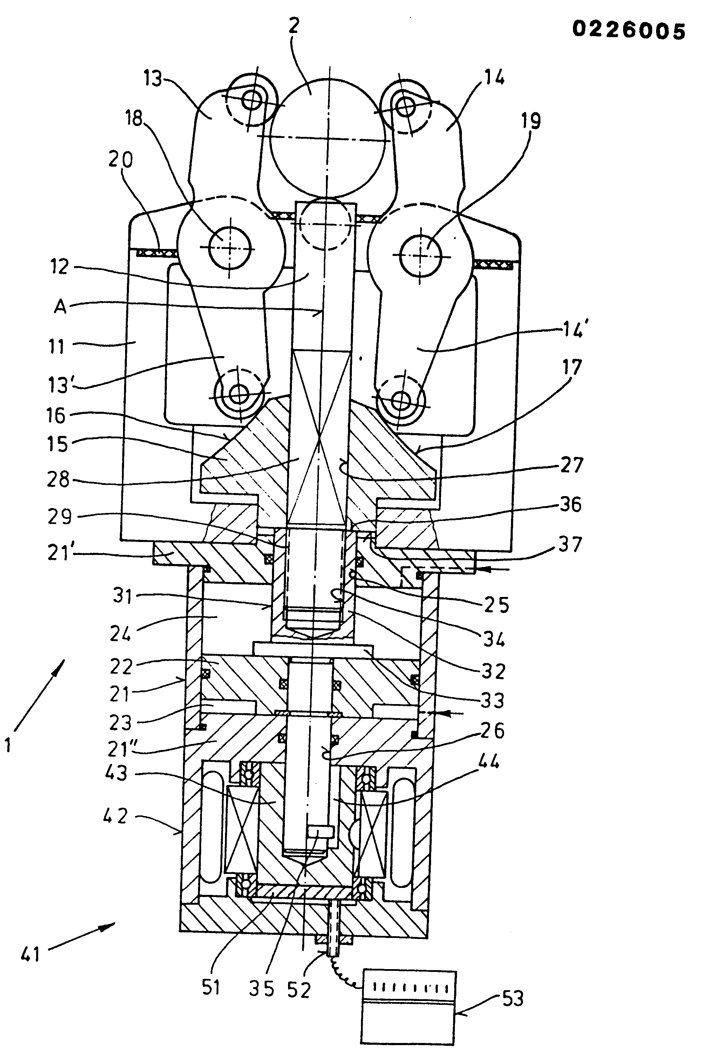

In der Zeichnung ist ein Ausführungsbeispiel einer gemäß der Erfindung ausgebildeten selbstzentrierenden Lünette dargestellt, das nachfolgend im einzelnen erläutert ist.

Die in der Zeichnung dargestellte und mit 1 bezeichnete selbstzentrierende Lünette dient zum Aufspannen und/ oder zur Halterung von stangenförmigen Werkstücken 2 und besteht jeweils aus drei in einem Gehäuse 11 eingesetzten in einer Ebene angeordneten Haltegliedern 12, 13 und 14, wobei die beiden äußeren Halteglieder 13 und 14 als spiegelbildlich zueinander angeordnete Winkelhebel ausgebildet und um Gelenkbolzen 18 und 19 verschwenkbar gelagert sind. Das in Richtung auf die Achse des Werkstückes 2 verstellbare mittlere

./.

Halteglied 12 ist hierbei mit einem Verstellglied 15 in Form eines Prismas versehen, an dem Steuerflächen 16 und 17 angebracht sind, mit denen die freien Enden 13' und 14' der Halteglieder 13 und 14 zusammenwirken. Mittels einer Dichtung 20 ist das Gehäuse 11, das ohne Abschlußdeckel gezeigt ist, an der dem Werkstück 2 zugekehrten Seite abgedichtet.

Zur Betätigung der Halteglieder 12, 13 und 14 dient ein Betätigungskolben 22, der in einem an dem Gehäuse 11 angeflanschten Zylinder 21 eingesetzt ist. Wird dem Druckraum 23 bei der dargestellten Betriebsstellung Druckmittel zugeführt, so werden der Betätigungskolben 22, das mit diesem verbundene mittlere Halteglied 12 sowie das Verstellglied 15 nach oben verschoben, so daß das mittlere Halteglied 12 und die beiden äußeren Halteglieder 13 und 14 gegen das eingelegte Werkstück 2 gedrückt werden und dieses somit in der Lünette 1 eingespannt ist. Bei einer Druckmittelzuführung in den Druckraum 24 wird dagegen die Lünette 1 geöffnet und das Werkstück 2 kann entnommen werden.

Um stets eine zentrische Einspannung eines Werkstückes 2 mit einem vorgegebenen Durchmesser bei einer gewählten Spannkraft zu gewährleisten und somit sämtliche Fertigungstoleranzen und elastischen Verformungen aller an der Kraftübertragung beteiligter Bauteile auszugleichen, sind besondere Maßnahmen getroffen, durch die gewährleistet ist, daß auf einfache Weise eine Kompensation vorgenommen werden kann. Dies ist in der Weise zu bewerkstelligen, daß das Verstellglied 15 gegenüber dem mittleren Haltelgied 12 bei der Justierung Justierung unter Last in dessen Längsrichtung A

./.

um eine einstellbare Wegstrecke verstellbar ist.

Dazu dient ein verdrehbares Steuerglied 31 in Form einer Stange 32, die an dem einen Ende eine Gewindebohrung 34, in die mittels eines Gewindes 29 das mittlere Halteglied 12 eingeschraubt ist, aufweist und mit deren anderem Ende ein Stellglied 41 drehfest verbunden ist. Das Steuerglied 31 durchgreift die in die Zylinderdeckel 21' und 21'' eingearbeiteten Bohrungen 25 und 26 und liegt mit der dem Verstellglied 15 zugekehrten Stirnfläche 36 an dessen Anlagefläche 37 an. Außerdem ist an dem Steuerglied 31 ein Flansch 33 angeformt, an dem der Betätigungskolben 22 abgestützt ist. Mittels eines Keiles 35, der in einer in das Stellglied 41 eingearbeiteten Nut 44 axial geführt ist, ist das Steuerglied 31 drehfest mit dem Stellglied 41 gekoppelt.

Wird das Steuerglied 31 verdreht, so werden das mittlere Halteglied 12 und das Verstellglied 15 in Richtung der Längsachse A zueinander verstellt. Dazu ist das mittlere Halteglied 12 mittels eines rechteckigen Führungsteils 28 unverdrehbar in einer Ausnehmung 27 des Verstellgliedes 15 geführt.

Als Stellglied 41 ist ein elektrischer Schrittmotor 42 vorgesehen, in dessen Nabe 43 das Steuerglied 31 eingreift. Mittels des Keiles 35 ist das Steuerglied 31 hierbei drehfest, aber axial verschiebbar, in der Nut 44 der Nabe 43 gehalten.

Um beim Einspannen eines Werkstückes mit einem vorbestimmten Durchmesser mit einer gewählten Spannkraft alle Fertigungstoleranzen sowie sämtliche elastischen Verformungen der an der Kraftübertragung beteiligten

./.

Bauteile der Lünette zu kompensieren ist, die Lage des Verstellgliedes 15 in bezug auf das mittlere Halteglied 12 jeweils einzustellen. Dies wird in der Weise bewerkstelligt, daß durch Verdrehen des Stellgliedes 41 und des Steuergliedes 31 dieses geringfügig in die Gewindebohrung 29 hinein oder aus dieser herausgeschraubt wird. Die Anlagefläche 36 des Steuergliedes 31 wird somit vorgeschoben oder zurückgenommen, das Verstellglied 15 kann, da dieses mit der Stirnfläche 37 an der Anlagefläche 36 abgestützt ist, um diesen Verstellweg ausweichen.

In der Praxis wird die Justierung für ein Werkstück bestimmten Durchmessers und eine vorgegebene Spannkraft in der Weise erfolgen, daß dieses zwischen den Haltegliedern 12, 13 und 14 eingespannt wird. Zeigt sich dabei, daß eine außermittige Einspannung, beispielsweise ein Herausdrücken des Werkstückes 2 aus dem Zentrum der Lünette 1 durch das mittlere Halteglied 12 gegeben ist, so ist die Lage des mittleren Haltegliedes 12 gegenüber dem Verstellglied 15 zu verändern. Wird das Steuerglied 31 mit Hilfe des Stellgliedes 41 derart verdreht, daß das mittlere Halteglied 12 in das Steuerglied 31 hineingeschraubt wird, so wird das Verstellglied 15 gegenüber dem mittleren Halteglied 12 vorgesetzt und damit werden auch die beiden äußeren Halteglieder 13 und 14 mehr zugestellt, so daß das Werkstück 2 in das Zentrum der Lünette 1 zurückgeführt wird. Ist das Werkstück 2 durch Vorsetzen des Verstellgliedes 15 zentrisch eingespannt, wird der Verdrehweg des Schrittmotors 42 in Form von Drehimpulsen abgespeichert.

Dazu ist in dem Gehäusedeckel 45 ein Impulsaufnehmer 52 eingesetzt, der mit einem integrierten Schrittzählwerk 51 zusammenwirkt und der an ein Rechenwerk 53

./.

angeschlossen ist. In dem Rechenwerk 53 ist der Verdrehweg des Schrittmotors 42 in Abhängigkeit vom dem jeweiligen Spanndruck für das einzuspannende Werkstück sowie dessen Durchmesser speicherbar. In gleicher Weise sind die Werte für Werkstücke anderer Durchmesser bei jeweils gegebener Spannkraft zu ermitteln und festzuhalten, wobei Zwischenwerte durch Interpolation festgelegt werden können.

Vor Beginn eines Spannvorganges ist somit in Abhängigkeit von dem Durchmesser des einzuspannenden Werkstückes und der Spannkraft mittels des Schrittmotors 42 die entsprechende Verdrehung des Stellgliedes 31 und damit eine Lageänderung zwischen dem Verstellglied 15 und dem mittleren Halteglied 12 vorzunehmen, um eine zentrische Einspannung trotz Fertigungstoleranzen und elastischer Verformungen zu gewährleisten.

12. Dezember 1985  e-1
A 7841

SMW Schneider & Weißhaupt
GmbH

7996 Meckenbeuren

P a t e n t a n s p r ü c h e :

1. Lünette zum Aufspannen und/oder zur Halterung von stangenförmigen Werkstücken kreisförmigen Durchmessers auf einer Drehmaschine mit drei in einer gemeinsamen Ebene angeordneten Haltegliedern, deren jeweiliger Berührungsort gleichen Abstand von der Werkstückachse hat und von denen zwei Halteglieder als spiegelbildlich zueinander angeordnete schwenkbar gelagerte Winkelhebel ausgebildet sind und wobei zwischen diesen ein in Richtung auf die Werkzeugachse geradlinig durch einen von Druckmittel beaufschlagbaren Betätigungskolben verschiebbares drittes Halteglied eingesetzt ist, das ein Verstellglied in Form eines mit Steuerflächen versehenes Prisma trägt, das mit den freien Enden der Winkelhebel zusammenwirkt,

d a d u r c h   g e k e n n z e i c h n e t ,

./.

- 2 -

**0226005**

daß zur zentrischen Einspannung eines Werkstückes
(2) mit einem vorgegebenen Durchmesser und bei einer
einstellbaren Spannkraft zum Ausgleich der unterschiedlichen Zustellwege zwischen den beiden äußeren Haltegliedern (13, 14) und dem mittleren Haltelgied (12)
sowie der elastischen Verformungen der an der Kraftübertragung beteiligten Bauteile der Lünette (1)
das Verstellglied (15) gegenüber dem mittleren Halteglied (12) bei der Justierung unter Last in dessen
Längsrichtung (A) um eine einstellbare dem Ausgleich
entsprechenden Wegstrecke (S) gegenüber dem mittleren
Halteglied (12) definiert verstellbar angeordnet ist.

2. Lünette nach Anspruch 1,

d a d u r c h   g e k e n n z e i c h n e t ,

daß das mittlere Halteglied (12) drehfest z. B. mittels
des Verstellgiedes (15) geführt und über ein Gewinde
(29, 34), eine Kugelrollspindel oder einem ähnlichen
Übertragungsmittel mit einem Steuerglied (31) verbunden
ist, das durch den Betätigungskolben (22) verschiebbar
und mittels eines Stellgliedes (41) verdrehbar ist.

3. Lünette nach Anspruch 2,

d a d u r c h   g e k e n n z e i c h n e t ,

daß das Steuerglied (31) durch eine abgesetzte und/
oder mit einem Flansch (33) versehene Stange (32)
gebildet ist, an der vorzugsweise mittig der Betätigungskolben (22) abgestützt ist und an deren einem
Ende das mittlere Halteglied (12) mittels des Gewindes (29, 34) verstellbar und an deren anderem
Ende das Stellglied (41) angebracht ist.

4. Lünette nach Anspruch 2 oder 3,

d a d u r c h   g e k e n n z e i c h n e t ,

daß das Stellglied (41) durch einen mit integrierten Schrittzählwerk (51) versehenen Schrittmotor (42) gebildet ist, dessen Verdrehwege mittels eines Impulszählers (52) feststellbar und in einem Rechenwerk (53) speicherbar sind.

12. Dezember 1985   e-1
A 7841